# EUROPÄISCHE PATENTSCHRIFT

(11) **EP 3 120 821 B1**
(45) Veröffentlichungstag und Bekanntmachung des Hinweises auf die Patenterteilung: **09.05.2018**
(21) Anmeldenummer: 16001555.8
(22) Anmeldetag: 14.07.2016
(51) Int. Cl.: A61G 13/10, A61G 12/00, A61G 15/16, A61G 7/05

(54) **MEDIZINTECHNISCHE POSITIONIER- UND HALTEVORRICHTUNG**
MEDICAL POSITIONING AND RETAINING DEVICE
DISPOSITIF DE RETENUE ET DE POSITIONNEMENT MÉDICAL

(30) Priorität: 23.07.2015 DE 102015009336
(43) Veröffentlichungstag der Anmeldung: 25.01.2017
(73) Patentinhaber: Tragfreund GmbH, 98574 Schmalkalden (DE)
(72) Erfinder: Mühlenbeck, Andreas, 98574 Schmalkalden (DE)
(74) Vertreter: Weihrauch, Frank

(56) Entgegenhaltungen:
- DE-A1-102009 047 971
- DE-C1- 10 221 103
- FR-A1- 2 711 507
- US-A- 4 673 154
- US-A- 4 756 429

## Beschreibung

Die Erfindung betrifft eine medizintechnische Positionier- und Haltevorrichtung, insbesondere zur Positionierung und Halterung medizintechnischer Elemente in einem klinischen Umfeld.

Aus dem Stand der Technik sind bereits Vorrichtungen bekannt, welche eine Aufnahme technischer Geräte an schwenkbaren Tragarmen ermöglichen.

In diesem Zusammenhang beschreibt beispielsweise die Druckschrift DE 200 15 399 U1 eine Befestigungsvorrichtung mit mehreren Lagerabschnitten, welche drehbar und aufeinanderfolgend auf einem sich axial erstreckenden Grundkörper angeordnet sind und welche zur Aufnahme von Tragarmen dienen.

Eine solche Ausbildung der Befestigungsvorrichtung ermöglicht zwar ein unabhängiges Schwenken der einzelnen Tragarme, bedingt jedoch zwingend eine Festlegung der Länge des Grundkörpers auf die gewünschte Anzahl der übereinanderliegenden Lagerhülsen.

Dementsprechend kann durch eine solche Befestigungsvorrichtung nur eine eingeschränkte Variabilität hinsichtlich der Anzahl der Tragarme und hinsichtlich einer nachträglichen Ergänzung weiterer Tragarme bereitgestellt werden.

Eine weitere Lösung, insbesondere zur Aufnahme medizinischer Geräte in einem Operationssaal an mehreren, unabhängig voneinander schwenkbaren Tragarmen, wird in der Druckschrift DE 10 2009 047 971 A1 offenbart. Hierbei werden die einzelnen Tragarme durch Verschrauben mit einem Basisteil verbunden, wobei nacheinander zuerst ein erster Tragarm mit dem Basisteil und anschließend die weiteren Tragarme aufeinanderfolgend mit dem ersten Tragarm verschraubt werden.

Eine solche Aufnahmevorrichtung ermöglicht somit zwar einerseits eine variable und im Nachhinein erweiterbare Anordnung der Tragarme, andererseits erfordert diese Lösung jedoch durch die Verschraubung der die Tragarme aufnehmenden

Als nächstliegender Stand der Technik kann die Vorrichtung aus der Druckschrift US 4 673 154 A betrachtet werden, bei der bereits eine Begrenzung des Schwenkens über eine Art Bolzen ermöglicht wird, jedoch noch keine Festlegung durch Axialverlegung erfolgt. Ferner kann hier auf das Verschrauben zum Einstellen der Vorrichtung noch nicht verzichtet werden.

Die Aufgabe der vorliegenden Erfindung bildet es somit, eine Vorrichtung, insbesondere zur Aufnahme und Positionierung medizintechnischer Elemente bereitzustellen, welche eine besonders hohe Betriebssicherheit aufweist und eine variable und sichere Anordnung mehrerer Trägereinheiten bei gleichzeitig geringem Montageaufwand ermöglicht.

Die Aufgabe wird durch eine Positionier- und Haltevorrichtung mit den im Patentanspruch 1 aufgeführten Merkmalen gelöst. Bevorzugte Weiterbildungen ergeben sich aus den Unteransprüchen.

Eine erfindungsgemäße medizintechnische Positionier- und Haltevorrichtung weist ein Basiselement, eine Mehrzahl Trägereinheiten sowie ein Abschlusselement auf, wobei die Komponenten nachfolgend auch zusammengefasst als Kopplungspartner bezeichnet werden.

Das Basiselement stellt vorliegend die Verbindung der Positionier- und Haltevorrichtung zu einer tragenden Struktur, beispielsweise einer Decke eines Operationssaals, bereit und weist hierzu entsprechende Befestigungsmittel auf, welche zum Beispiel als Schrauben ausgebildet sind.

Die tragende Struktur stellt hierbei keinen Bestandteil der vorliegenden Erfindung dar.

Das Basiselement weist an einem unteren axialen Ende einen Aufnahmeabschnitt mit einem Hinterschneidungsbereich auf. Das untere axiale Ende stellt hierbei das der tragenden Struktur gegenüberliegende Ende des Basiselements dar.

Erfindungsgemäß weist zudem jede Trägereinheit der Positionier- und Haltevorrichtung einen Statorkern mit einem oberen axialen Ende und einem unteren axialen Ende auf. Das obere axiale Ende stellt das in gekoppeltem Zustand der tragenden Struktur zugewandte Ende und das untere axiale Ende das in gekoppeltem Zustand der von der tragenden Struktur abgewandte Ende dar. Der Statorkern weist an dem oberen axialen Ende einen Eingriffsabschnitt mit einem Übergreifungssegment und an dem unteren axialen Ende in gleicher Weise wie das Basiselement einen Aufnahmeabschnitt mit einem Hinterschneidungsbereich auf.

Die Anordnung der Trägereinheiten innerhalb der Positionier- und Haltevorrichtung erfolgt erfindungsgemäß derart, dass eine erste Trägereinheit mit dem Basiselement oder einer vorgelagerten Trägereinheit gekoppelt wird, wobei der Statorkern der ersten Trägereinheit in den korrespondierenden Aufnahmeabschnitt des Basiselements oder des Statorkerns der vorgelagerten Trägereinheit eingeführt und in der eingeführten Lage in dem entsprechenden Aufnahmeabschnitt verdreht wird. Die Verdrehung erfolgt soweit, dass das Übergreifungssegment des Eingriffsabschnitts des Statorkerns der ersten Trägereinheit den Hinterschneidungsbereich des Aufnahmeabschnitts des Basiselements oder des Statorkerns der vorgelagerten Trägereinheit hintergreift und auf diese Weise auch in axialer Richtung ein Formschluss zwischen der ersten Trägereinheit und dem Basiselement, beziehungsweise zwischen der ersten Trägereinheit und der vorgelagerten Trägereinheit bereitgestellt wird.

Der bereitstellbare Formschluss wird in diesem Zusammenhang als Kopplungsendlage bezeichnet, in welcher die erste Trägereinheit ihre finale Position relativ zu dem Basiselement oder der vorgelagerten Trägereinheit eingenommen hat.

Der Begriff Kopplungsendlage wird nachfolgend für alle Kopplungspartner in gleicher Weise verwendet und beschreibt hierbei die Endmontagelage des jeweiligen Kopplungspartners in der Positionier- und Haltevorrichtung.

Die erste Trägereinheit weist zudem, ebenso wie alle weiteren Trägereinheiten in der Positionier- und Haltevorrichtung, mindestens einen Sperrbolzen auf, weleher in einer entsprechenden Sperrbolzenaufnahme des jeweiligen Statorkerns axial beweglich aufnehmbar ist.

Vorzugsweise weisen die Trägereinheiten drei radial versetzt angeordnete Sperrbolzen und entsprechend drei Sperrbolzenaufnahmen auf.

Die Anordnung des mindestens einen Sperrbolzens in dem jeweiligen Statorkern erfolgt erfindungsgemäß derart, dass dieser in der Kopplungsendlage in eine axiale Endlage bringbar ist.

In einer solchen axialen Endlage greift der Sperrbolzen eines Kopplungspartners derart in den vorgelagerten Kopplungspartner ein, dass ein Verdrehen des Kopplungspartners gegenüber dem vorgeschalteten Kopplungspartner verhindert wird.

Im Falle der ersten Trägereinheit bedeutet dies, dass deren Sperrbolzen in deren Kopplungsendlage formschlüssig in das Basiselement oder den Statorkern der vorgelagerten Trägereinheit eingreift und so die Kopplungsendlage der ersten Trägereinheit innerhalb der Positionier- und Haltevorrichtung fixiert wird.

Der Eingriff des Sperrbolzens erfolgt hierbei in einen dafür vorgesehenen Ausnehmungsabschnitt des Basiselements oder des Statorkerns der vorgelagerten Trägereinheit, wobei der Ausnehmungsabschnitt beispielsweise als Loch oder Einschnitt in dem jeweiligen Aufnahmeabschnitt des Basiselements oder des Statorkerns der vorgelagerten Trägereinheit ausgebildet ist.

Die Anordnung des Sperrbolzens in dem jeweiligen Statorkern erfolgt ferner derart, dass dieser durch einen Statorkern einer nachgelagerten Trägereinheit oder durch das Abschlusselement formschlüssig in seiner axialen Endlage festgelegt wird.

Somit wird auf besonders unkomplizierte Art und Weise eine Fixierung der jeweiligen Trägereinheiten in deren Kopplungsendlage innerhalb der Positionier- und Haltevorrichtung ermöglicht, welche ausschließlich durch das Aneinanderkoppeln der einzelnen Kopplungspartner und dementsprechend ohne zusätzliches Anordnen weiterer Sicherungselemente bereitgestellt wird.

Darüber hinaus weist jede Trägereinheit einer erfindungsgemäßen Positionier- und Haltevorrichtung einen Ringkörper auf, welcher den zugehörigen Statorkern umgreift und um diesen verdrehbar ist.

Jeder Ringkörper weist hierbei einen Befestigungsabschnitt auf, an welchem eine oder mehrere medizinische Einheiten befestigbar sind. Befestigen ist im weiten Sinne zu verstehen, so dass die medizinische Einheit auch als bauliche Einheit ausgebildet sein kann.

Unter medizinischen Einheiten werden vorliegend insbesondere technische Geräte zur Ausführung eines Operationsvorgangs in einem Operationssaal verstanden, wobei es sich beispielsweise um OP-Leuchten, Überwachungsmonitore oder Operations- oder Ablagevorrichtungen handeln kann.

Die medizinischen Einheiten selbst sind nicht Bestandteil der erfindungsgemäßen Positionier- und Haltevorrichtung.

Durch die Verdrehbarkeit des jeweiligen Ringkörpers wird vorliegend eine unabhängige Schwenkbarkeit der an der jeweiligen Trageinheit aufgenommenen, medizinischen Einheit ermöglicht.

Die erfindungsgemäße Positionier- und Haltevorrichtung bietet den technologischen Vorteil, dass durch die Ausbildung der Kopplungspartner eine besonders einfache und zudem werkzeuglose Montage sowie Demontage ermöglicht wird.

Ein weiterer Vorteil besteht in der hohen Variabilität und Erweiterbarkeit der Anzahl der Trageinheiten.

Ferner besteht ein Vorteil in der besonders hohen Betriebssicherheit, da durch die Verkopplung der Formschlüsse von Eingriffsabschnitt und Aufnahmeabschnitt, von Sperrbolzen und von nachfolgendem Kopplungspartner eine Lösung einer Trägereinheit prinzipbedingt ohne zusätzlichen Sicherungsmittel ausgeschlossen wird, sofern nicht der letzte Kopplungspartner, also das Abschlusselement, gelöst ist. Zudem besteht der Vorzug einer Ankündigung einer etwaigen Störung, da ein Lösen des Abschlusselements visuell unmittelbar erkennbar ist. Dies kann zusätzlich durch eine auffällige Farbgebung des sonst verdeckt liegenden unteren Endes der letzten Trägereinheit unterstützt werden.

In einer besonders vorteilhaften Weiterbildung der Erfindung weisen die Statorkerne der Trägereinheiten an einem axialen Ende einen feststehenden Radialflansch auf, welcher derart ausgebildet ist, dass der entsprechende Ringkörper an einem seiner axialen Enden durch den Radialflansch zumindest axial geführt wird.

Durch den Radialflansch eines Statorkerns ist vorliegend ein einseitig wirkender Formschluss mit dem Ringkörper und dementsprechend eine axiale Lagefestlegung des Ringkörpers bereitstellbar.

Die Radialflansche miteinander gekoppelter Kopplungspartner sind ferner so ausgebildet, dass der Ringkörper einer Trägereinheit an seinem jeweils anderen axialen Ende durch den Ringflansch einer vor- oder einer nachgeschalteten Trägereinheit axial geführt wird.

Durch das Zusammenwirken der Radialflansche wird im Ergebnis ein beidseitig wirkender Formschluss mit dem Ringkörper der jeweiligen Trägereinheit und somit eine beidseitige Lagefestlegung des Ringkörpers bewirkt.

Gleichzeitig erfolgt auf den jeweils untenliegenden Radialflanschen die Führung der jeweiligen Ringkörper während deren Verdrehens, wobei die Radialflansche zu diesem Zweck zusätzlich über eine Gleitschicht verfügen können. Alternativ zu einer Gleitschicht kann ein Statorkern einer jeweiligen Trägereinheit ein umlaufendes Lagerelement, beispielsweise in Form eines Gleitlagerrings, aufweisen, durch welches ein einseitiger Formschluss mit dem jeweiligen Ringkörper bereitgestellt auf welchem der entsprechend zugehörige Ringkörper führbar ist.

Aufgrund der Radialflansche kann als besonderer Vorteil auf zusätzliche Elemente zur Führung und Lagefestlegung der Ringkörper an den zugehörigen Statorkernen verzichtet und somit eine kostengünstige Bereitstellung der Trägereinheiten ermöglicht werden. Ferner kann durch diese Weiterbildung eine einfache Demontierbarkeit von Statorkern und Ringkörper bereitgestellt werden. Vorzugsweise wird der Ringkörper einfach axial auf den Statorkern aufgeschoben, wobei er in dieser axialen Lage ohne Zusatzmittel allein durch die Verkopplung der Kopplungspartner gehalten wird.

Des Weiteren sieht eine vorteilhafte Variante der Positionier- und Haltevorrichtung vor, dass der Sperrbolzen einer vorgelagerten Trägereinheit in einer anderen Lage als seiner axialen Endlage das Herbeiführen einer Kopplungsendlage einer nachgelagerten Trägereinheit oder des Abschlusselements verhindert. Der Sperrbolzen ist hierbei so ausgebildet, dass dieser nur in seiner axialen Endlage mit dem unteren Ende der Sperrbolzenaufnahme des zugehörigen Kopplungspartners abschließt.

Liegen die Sperrbolzenaufnahme eines Kopplungspartners und der entsprechende Ausnehmungsabschnitt des jeweils vorgelagerten Kopplungspartners nicht in einer Kopplungsendlage und damit nicht korrespondierend übereinander, kann der Sperrbolzen nicht in den Ausnehmungsabschnitt eingeführt und somit nicht in seine axiale Endlage gebracht werden. Der Sperrbolzen steht dann an dem unteren Ende des Statorkerns über und versperrt auf diese Weise einem Statorkern eines nachgelagerten Trägerelements oder des Abschlusselements den Weg zur Durchführung einer Kopplung.

Der besondere Vorteil besteht in der hohen Betriebssicherheit, da die Montage weiterer Kopplungspartner bedingt, dass der Sperrbolzen ordnungsgemäß in axialer Endlage und damit Eingriffslage steht.

Gemäß einer vorteilhaften Variante der Erfindung sind die Sperrbolzenaufnahme und der Sperrbolzen einer Trägereinheit derart ausgebildet, dass die Sperrbolzenaufnahme einen Innengewindeabschnitt und der Sperrbolzen einen Außengewindeabschnitt aufweisen, wobei der Sperrbolzen mittels Verdrehen in der Sperrbolzenaufnahme in seine axiale Endlage bringbar ist.

Das Verdrehen des Sperrbolzens bewirkt hierbei, dass diese in seiner axialen Endlage gegen den Grund-der Ausnehmung des jeweils vorgelagerten Kopplungspartners verspannt wird und auf diese Weise der Hintergreifungsabschnitt des vorgelagerten Kopplungspartners gegen das Übergreifungssegment des nachfolgenden Kopplungspartners verspannbar ist.

Somit können als besonderer Vorteil durch den Sperrbolzen die miteinander verbundenen Kopplungspartner axial spielfrei zueinander festgelegt werden.

Zudem wird auch hierdurch die hohe Betriebssicherheit weiter verbessert in dem eine etwaige Lockerung der Verspannung zum ersten nicht zu einem Versagen der Verbindung führt und zum zweiten durch den Nutzer durch ein auftretendes Spiel bemerkbar ist, so dass Maßnahmen zur Überprüfung eingeleitet werden können.

Die Befestigungsabschnitte der Ringkörper der jeweiligen Trägereinheiten sind in einer weiteren vorteilhaften Ausbildung der Positionier- und Haltevorrichtung als Tragarme ausgebildet.

In Form der Tragarme ermöglichen die Befestigungsabschnitte eine besonders flexible Aufnahme der medizinischen Einheiten, wobei die Tragarme auch teleskopartig oder mit Gelenken ausgebildet sein können, sodass durch diese eine - längenveränderliche Aufnahme der medizinischen Einheiten bereitstellbar ist.

Darüber hinaus sieht eine vorteilhafte Weiterbildung der Positionier- und Haltevorrichtung vor, dass die Hintergreifungsabschnitte und/oder die Übergreifungssegmente der Kopplungspartner mehrgliedrig ausgebildet und über den Umfang des jeweiligen Aufnahme- oder Eingriffsabschnittes radial verteilt angeordnet sind.

Vorzugsweise sind die Hintergreifungsabschnitte und/oder die Übergreifungssegmente dreigliedrig ausgebildet, wobei die einzelnen Glieder in einem Winkel von etwa 120 Grad versetzt zueinander angeordnet sind. Als Winkel von etwa 120 Grad wird ein Bereich von 90 Grad bis 150 Grad verstanden, wobei sich die Größe drei Winkel im genannten Bereich so verteilt ist, dass in deren Summe 360 Grad vorliegen.

Durch die Mehrgliedrigkeit wird in diesem Zusammenhang eine besonders komfortable und gleichzeitig mechanisch hoch belastbare Kopplung der Kopplungspartner in der Positionier- und Haltevorrichtung ermöglicht.

Die erfindungsgemäße, medizinische Positionier- und Haltevorrichtung wird als Ausführungsbeispiel anhand von
- Fig. 1: Explosionsdarstellung
- Fig. 2: Seitenansicht geschnitten
- Fig. 3: Detailansicht Trägereinheiten
- Fig. 4a: Schrägansicht Trägereinheit Oberseite
- Fig. 4b: Schrägansicht Trägereinheit Unterseite
näher erläutert.

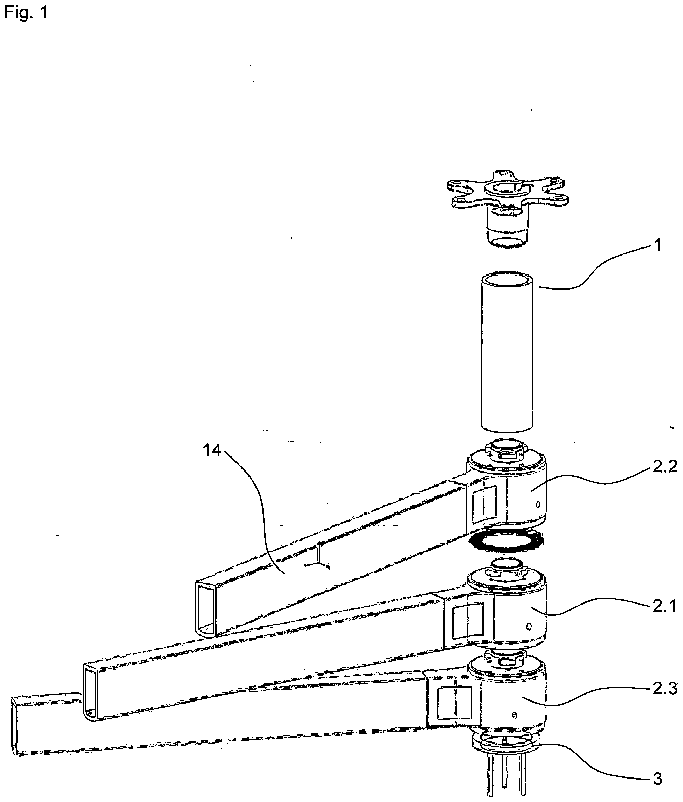

Fig. 1 zeigt die medizinische Positionier- und Haltevorrichtung in einem Ausführungsbeispiel mit einem Basiselement 1, drei Trägereinheiten 2.1, 2.2 und 2.3, sowie einem Abschlusselement 3.

Die genannten Elemente werden nachfolgend auch als Kopplungspartner bezeichnet.

Die Trägereinheiten 2.1 bis 2.3 weisen jeweils einen Befestigungsabschnitt 14 auf, wobei die Befestigungsabschnitte vorliegend als schwenkbare Tragarme zur Aufnahme medizinischer Geräte ausgebildet sind.

Das Basiselement 1 wird vorliegend mittels Befestigungselementen (nicht dargestellt) an einer tragenden Struktur (nicht dargestellt) befestigt, wobei die tragende Struktur vorliegend als Decke eines Operationssaales ausgebildet ist, an welcher die Positionier- und Haltevorrichtung angeordnet ist.

Ferner sind die Trägereinheiten 2 miteinander sowie mit dem Basiselement 1 und dem Abschlusselement 3 verbindbar.

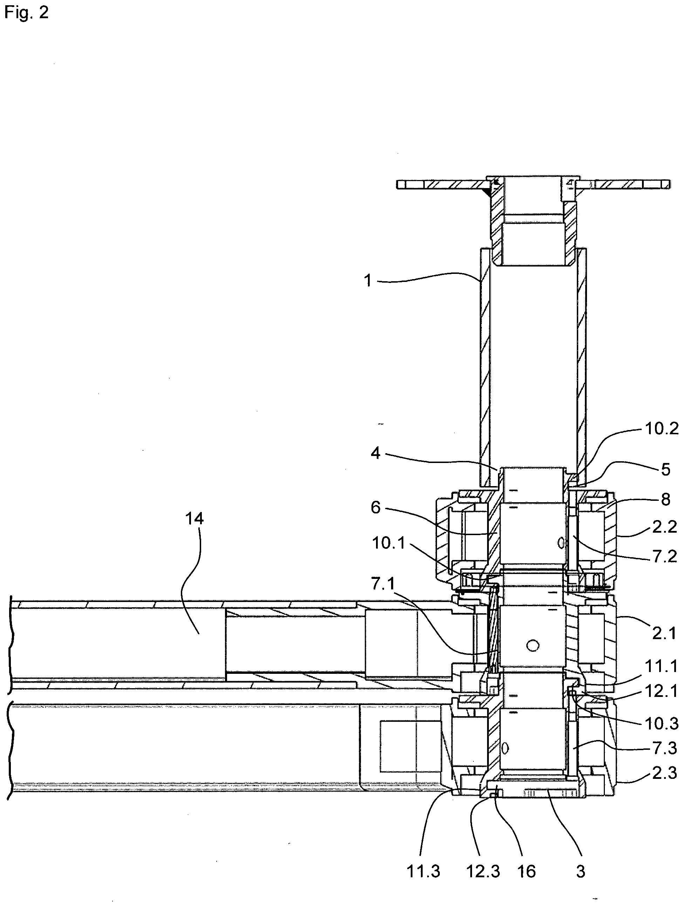

In Fig. 2 wird die Positionier- und Haltevorrichtung in einer geschnittenen Seitenansicht dargestellt.

Wie Fig. 2 zeigt, weist das Basiselement 1 vorliegend einen Aufnahmeabschnitt 4 mit einem Hinterschneidungsbereich 5 auf. Zudem weist jede Trägereinheit 2 einen feststehenden Statorkern 6 und einen mit diesem drehbar verbundenen Ringkörper 8 auf, wobei die Ringkörper 8 die Aufnahmeabschnitte 14 aufweisen.

Zur Verbindung miteinander sowie zur Verbindung mit dem Basiselement 1 oder dem Abschlusselement 3, weist jeder Statorkern 6 einer Trägereinheit 2 vorliegend einen Eingriffsabschnitt 9 mit jeweils einem Übergreifungssegment 10 sowie einen Aufnahmeabschnitt 11 mit jeweils einem Hinterschneidungsbereich 12 auf.

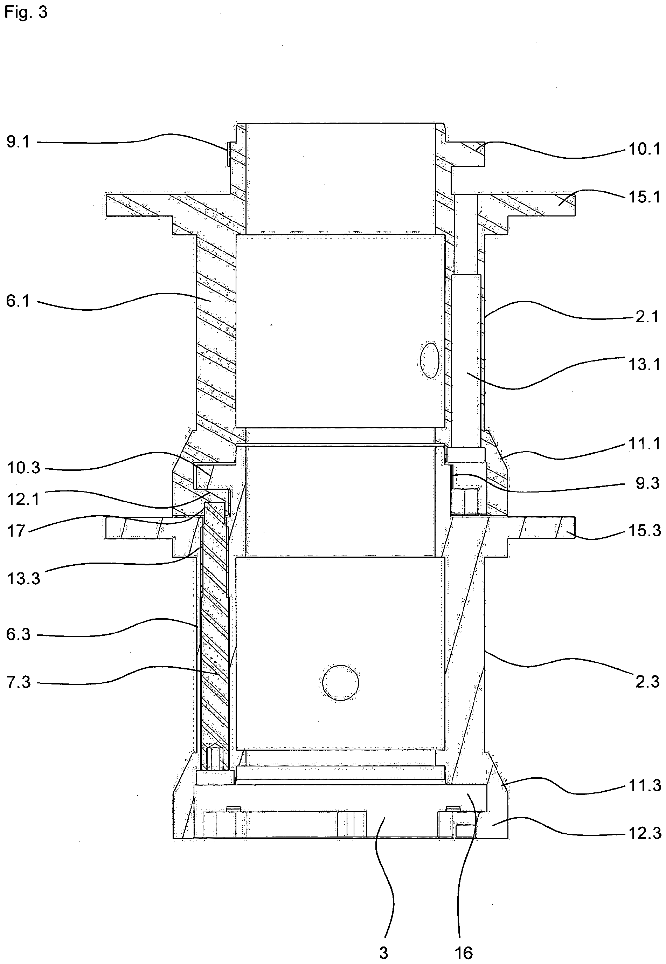

Zur besseren Veranschaulichung des Zusammenwirkens der einzelnen Abschnitte wird zusätzlich auf Fig. 3 verwiesen, welche eine erste Trägereinheit 2.1 und eine mit dieser verbundene, nachgelagerte Trägereinheit 2.3 und das Abschlusselement 3 zeigt.

Das Verbinden zweier Trägereinheiten 2 miteinander wird vorliegend anhand Fig. 3 erläutert, wobei das Verbinden analog für die Verbindung einer Trägereinheit 2 mit dem Basiselement 1 oder dem Abschlusselement 3 vorgenommen wird.

Zur Verbindung der in Fig. 3 dargestellten Trägereinheiten 2.1 und 2.3 wird der Eingriffsabschnitt 9.3 des Statorkerns 6.3 der nachgelagerten Trägereinheit 2.3 in den Aufnahmeabschnitt 11.1 der ersten Trägereinheit 2.1 eingeführt und in diesem so verdreht, dass das Übergreifungssegment 10.3 der nachgelagerten Trägereinheit 2.3 den Hinterschneidungsbereich 12.1 der ersten Trägereinheit 2.1 hintergreift. Auf diese Weise wird vorliegend eine in axiale Richtung wirkende und lösbare, formschlüssige Verbindung zwischen den Trägereinheiten 2.1 und 2.3 bereitgestellt. Die auf diese Weise bereitstellbare Verbindung wird vorliegend als Kopplungsendlage bezeichnet.

Zur Bereitstellung eines ebenfalls für eine feste Verbindung der Trägereinheiten 2 miteinander sowie mit dem Basiselement 1 oder dem Abschlusselement 3 erforderlichen, radialen Formschlusses, weist jede Trägereinheit 2 mindestens einen Sperrbolzen 7 auf, welcher in einer entsprechenden Sperrbolzenaufnahme 13 des jeweiligen Statorkerns 6 axial verschieblich angeordnet ist.

In der Kopplungsendlage, vorliegend der nachgelagerten Trägereinheit 2.3, wird deren Sperrbolzen 7.3 axial bis zum Erreichen seiner Endlage soweit verschoben, dass dieser in einen entsprechend korrespondierenden Ausnehmungsabschnitt 17 der ersten Trägereinheit 2.1 eingreift und so den radialen Formschluss zwischen den Trägereinheiten 2.1 und 2.3 bereitstellt.

Die Fixierung des jeweiligen Sperrbolzens 7 in seiner axialen Endlage erfolgt vorliegend durch den jeweils nachgelagerten Kopplungspartner, im Falle der Trägereinheiten 2 durch den jeweiligen Statorkern 6 und im Falle des Abschlusselements 3 durch dieses selbst.

Zur Optimierung des radialen Formschlusses weist jede Trägereinheit 2 vorliegend drei Sperrbolzen 7 auf, welche in entsprechenden Sperrbolzenaufnahmen 13 der Statorkerne 6 aufgenommen sind.

Die Fig. 2 zeigt die Positionier- und Haltevorrichtung in einem Ausführungsbeispiel mit drei Trägereinheiten 2.1 bis 2.3, welche miteinander sowie an einem oberen Ende mit dem Basiselement 1 und an einem gegenüberliegenden, unteren Ende mit dem Abschlusselement 3 verbunden sind.

Hierbei ist eine erste Trägereinheit 2.1 mit einer vorgelagerten Trägereinheit 2.2 und mit einer nachgelagerten Trägereinheit 2.3 verbunden, wobei die vorgelagerte Trägereinheit 2.2 wiederum mit dem Basiselement 1 und die nachgelagerte Trägereinheit 2.3 mit dem Abschlusselement 3 verbunden ist.

Die Verbindung zwischen dem Basiselement 1 und der vorgelagerten Trägereinheit 2.2 erfolgt, wie oben bereits im Zusammenhang mit Fig. 3 angeführt, analog zu der Verbindung der ersten Trägereinheit 2.1 mit der nachgelagerten Trägereinheit 2.3.

Der Eingriffsabschnitt 9.2 mit dem Übergreifungssegment 10.2 wird hierbei in den Aufnahmeabschnitt 4 des Basiselements 1 eingeführt und in diesem soweit verdreht, dass das Übergreifungssegment 10.2 den Hinterschneidungsbereich 5 des Basiselements 1 hintergreift und so in der Kopplungsendlage der axiale Formschluss zwischen diesen beiden Kopplungspartnern bereitgestellt wird. Gleichzeitig werden in der Kopplungsendlage die Sperrbolzen 7.2 der vorgelagerten Trägereinheit 2.2 in ihre axiale Endlage gebracht, in welcher diese in entsprechende Ausnehmungen (der Übersichtlichkeit halber nicht explizit dargestellt) des Basiselements 1 eingreifen und so den radialen Formschluss zwischen beiden Kopplungspartnern bereitstellen.

In ihrer axialen Endlage werden die Sperrbolzen 7.2 der vorgelagerten Trägereinheit 2.2 durch den Statorring 6.1 der sich an diese anschließenden, ersten Trägereinheit 2.1 fixiert.

Auf gleiche Weise werden die Verbindungen zwischen der ersten Trägereinheit 2.1 und der vorgelagerten Trägereinheit 2.2 sowie zwischen der ersten Trägereinheit 2.1 und der nachgelagerten Trägereinheit 2.3 und zwischen der nachgelagerten Trägereinheit 2.3 und dem Abschlusselement 3 bereitgestellt.

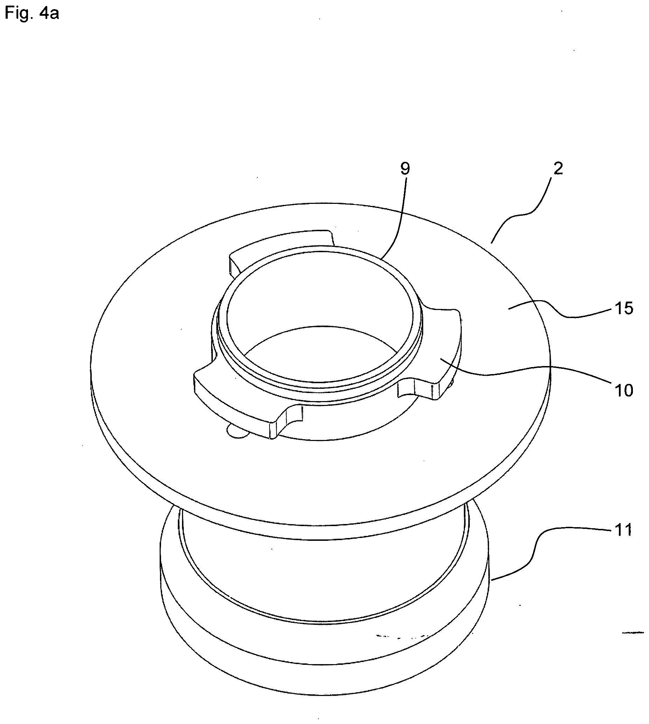

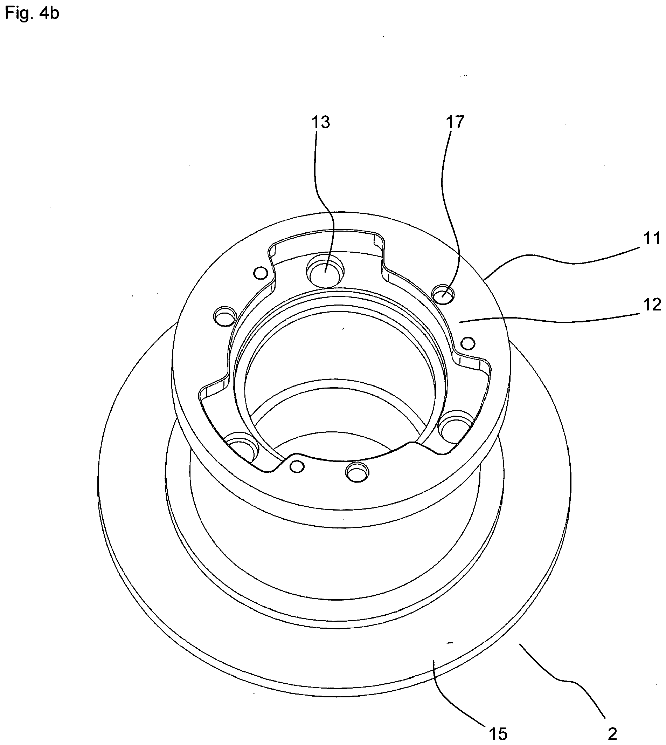

Die Figuren 4a und 4b zeigen vorliegend eine bevorzugte Ausführungsvariante der Trägereinheiten 2, wobei die Übergreifungssegmente 10 sowie die Hinterschneidungsbereiche 12 mehrgliedrig ausgebildet sind und jeweils drei Glieder aufweisen. Auf diese Weise wird ein einfaches Verbinden der Kopplungspartner bei gleichzeitigem Bereitstellen eines sicheren, axialen Formschlusses ermöglicht.

Zudem zeigen die Figuren 1 bis 4b eine weitere vorteilhafte Variante der Erfindung, in welcher die Trägereinheiten 2 an einem Ende jeweils einen Radialflansch 15 aufweisen, durch welche, wie in Fig. 2 dargestellt, die Ringkörper 8 der Trägereinheiten 2 axial in Position gehalten werden.

Hierbei erfolgt die Lagefestlegung eines Ringkörpers 8 nach oben durch den Ringflansch 15 der zugehörigen Trägereinheit 2 und nach unten durch den Ringflansch 15 der jeweils nachgelagerten Trägereinheit 2.

Zudem sind die Sperrbolzen 7 der Trägereinheiten 2 vorliegend gemäß einer ebenso vorteilhaften Ausführungsvariante derart ausgebildet, dass diese einen Außengewindeabschnitt aufweisen, mittels dessen die Sperrbolzen 7 in einem korrespondierenden Innengewindeabschnitt der entsprechenden Sperrbolzenaufnahme 13 verdrehbar und so in ihre axiale Endlage bringbar sind.

In der axialen Endlage liegt hierbei eine Verspannung des jeweiligen Sperrbolzens 7 gegen den Grund der jeweils korrespondierenden Ausnehmung 17 vor, durch welche als besonderer Vorteil dazu führt, dass der Hinterschneidungsbereich 12 eines Kopplungspartners und das Übergreifungssegment 10 eines nachgelagerten Kopplungspartners gegeneinander verspannt und die Kopplungspartner somit axial spielfrei zueinander festgelegt werden können.

### Verwendete Bezugszeichen

- 1: Basiselement
- 2: Trägereinheiten
- 2.1: erste Trägereinheit
- 2.2: vorgelagerte Trägereinheit
- 2.3: nachgelagerte Trägereinheit
- 3: Abschlusselement
- 4: Aufnahmeabschnitt Basiselement
- 5: Hinterschneidungsbereich Basiselement
- 6: Statorkerne
- 6.1: Statorkern erste Trägereinheit
- 6.3: Statorkern nachgelagerte Trägereinheit
- 7: Sperrbolzen
- 7.1: Sperrbolzen erste Trägereinheit
- 7.2: Sperrbolzen vorgelagerte Trägereinheit
- 7.3: Sperrbolzen nachgelagerte Trägereinheit
- 8: Ringkörper
- 9: Eingriffsabschnitte
- 9.1: Eingriffsabschnitt erste Trägereinheit
- 9.3: Eingriffsabschnitt nachgelagerte Trägereinheit
- 10: Übergreifungssegmente
- 10.1: Übergreifungssegment erste Trägereinheit
- 10.2: Übergreifungssegment vorgelagerte Trägereinheit
- 10.3: Übergreifungssegment nachgelagerte Trägereinheit
- 11: Aufnahmeabschnitte Trägereinheiten
- 11.1: Aufnahmeabschnitt erste Trägereinheit
- 11.2: Aufnahmeabschnitt vorgelagerte Trägereinheit
- 11.3: Aufnahmeabschnitt nachgelagerte Trägereinheit
- 12: Hinterschneidungsbereiche Trägereinheiten
- 12.1: Hinterschneidungsbereich erste Trägereinheit
- 12.2: Hinterschneidungsbereich vorgelagerte Trägereinheit
- 12.3: Hinterschneidungsbereich nachgelagerte Trägereinheit
- 13: Sperrbolzenaufnahmen
- 13.1: Sperrbolzenaufnahme erste Trägereinheit
- 13.2: Sperrbolzenaufnahme vorgelagerte Trägereinheit
- 14: Befestigungsabschnitte
- 15: Radialflansche
- 15.1: Radialflansch erste Trägereinheit
- 15.3: Radialflansch nachgelagerte Trägereinheit
- 16: Übergreifungssegment Abschlusselement
- 17: Ausnehmungabschnitt erste Trägereinheit

## Patentansprüche

1. Medizintechnische Positionier- und Haltevorrichtung,
aufweisend ein Basiselement (1), eine Mehrzahl Trägereinheiten (2) sowie ein Abschlusselement (3), wobei die Trägereinheiten (2) untereinander und mit dem Basiselement (1) sowie mit dem Abschlusselement (3) koppelbar sind, wobei das Basiselement (1) Befestigungsmittel zur Befestigung an einer Struktur sowie einen Aufnahmeabschnitt (4) aufweist und wobei der Aufnahmeabschnitt (4) einen Hinterschneidungsbereich (5) aufweist, und wobei jede Trägereinheit (2) einen Statorkern (6), mindestens einen Sperrbolzen (7) und einen Ringkörper (8) aufweist, wobei jeder Statorkern (6) ein oberes axiales Ende und ein unteres axiales Ende aufweist und wobei jeder Statorkern (6) an seinem oberen axialen Ende einen Eingriffsabschnitt (9) mit einem Übergreifungssegment (10) und an seinem unteren axialen Ende einen Aufnahmeabschnitt (11) mit einem Hinterschneidungsbereich (12) aufweist und wobei der Eingriffsabschnitt (9) eines Statorkerns (6) einer ersten Trägereinheit (2.1) in den Aufnahmeabschnitt (4) des Basiselements (1) oder in einen Aufnahmeabschnitt (11.2) eines Statorkerns (6.2) einer vorgelagerten Trägereinheit (2.2) einführbar und in einer eingeführten Lage verdrehbar ist, wobei durch die Verdrehung eine Kopplungsendlage bereitstellbar ist und wobei in der Kopplungsendlage ein Eingriff des Übergreifungssegments (10.1) des Eingriffsabschnitts (9.1) des Statorkerns (6.1) der ersten Trägereinheit (2.1) in den Hinterschneidungsbereich (5) des Aufnahmeabschnitts (4) des Basiselements (1) oder in einen Hinterschneidungsbereich (12.2) des Aufnahmeabschnitts (11.2) des Statorkerns (6.2) der vorgelagerten Trägereinheit (2.2) bereitstellbar ist, und wobei jeder Statorkern (6) eine Sperrbolzenaufnahme (13) aufweist, in welcher der mindestens eine Sperrbolzen (7) der jeweiligen Trägereinheit (2) aufnehmbar und in eine axiale Endlage bringbar ist, wobei mittels eines Sperrbolzens (7.1) des Statorkerns (6.1) der ersten Trägereinheit (2.1) deren Kopplungsendlage mittels eines formschlüssigen Versperrens gegen Verdrehung des Statorkerns (6.1) der ersten Trägereinheit (2.1) gegenüber dem Basiselement (1) oder dem Statorkern (6.2) der vorgelagerten Trägereinheit (2.2) bereitstellbar ist und wobei der Sperrbolzen (7.1) der ersten Trägereinheit (2.1) in seiner axialen Endlage durch einen Statorkern (6.3) einer nachgelagerten Trägereinheit (2.3) in dessen Kopplungsendlage oder durch das Abschlusselement (3) festlegbar ist, und wobei jeder Ringkörper (8) den Statorkern (6) der zugehörigen Trägereinheit (2) umgreift und um den Statorkern (6) drehbar ausgebildet ist und wobei jeder Ringkörper (8) jeweils einen Befestigungsabschnitt (14) zur Befestigung medizinischer Einheiten aufweist, und wobei das Abschlusselement (3) mit dem Statorkern (6) einer Trägereinheit (2) an dessen unterem axialen Ende verbindbar ist.

2. Medizintechnische Positionier- und Haltevorrichtung nach Anspruch 1,
wobei jeder Statorkern (6) an einem axialen Ende einen feststehenden Radialflansch (15) aufweist und wobei der Ringkörper (8) einer Trägereinheit (2) an einem ersten axialen Ende durch den Radialflansch (15) des Statorkerns (6) der zugehörigen Trägereinheit (2) und an einem zweiten axialen Ende durch den Radialflansch (15) des Statorkerns (6) einer vorgelagerten oder einer nachgelagerten Trägereinheit (2) oder durch das Basiselement (1) oder durch das Abschlusselement (3) axial geführt wird.

3. Medizintechnische Positionier- und Haltevorrichtung nach Anspruch 1 oder 2,
wobei der mindestens eine Sperrbolzen (7) einer vorgelagerten Trägereinheit (2) in einer anderen Lage als seiner axialen Endlage das Herbeiführen einer Kopplungsendlage einer nachgelagerten Trägereinheit (2) oder des Abschlusselements (3) verhindert.

4. Medizintechnische Positionier- und Haltevorrichtung nach einem der vorhergehenden Ansprüche,
wobei die Sperrbolzenaufnahme (13) einer Trägereinheit (2) einen Innengewindeabschnitt und der zugehörige Sperrbolzen (7) einen Außengewindeabschnitt aufweisen und wobei der Sperrbolzen (7) in seiner axialen Endlage gegen einen korrespondierenden Grund einer Ausnehmung (17) der vorgelagerten Trägereinheit (2.2) oder des Basiselements (1) verspannbar ist.

5. Medizintechnische Positionier- und Haltevorrichtung nach einem der vorherigen Ansprüche,
wobei die Befestigungsabschnitte (14) der Ringkörper (8) der Trägereinheiten (2) als Tragarme ausgebildet sind.

6. Medizintechnische Positionier- und Haltevorrichtung nach einem der vorhergehenden Ansprüche,
wobei die Hinterschneidungsbereiche (5) und/oder die Übergreifungssegmente (10) mehrgliedrig ausgebildet und radial verteilt angeordnet sind.

## Claims

1. A medical positioning and holding device
comprising a base element (1), a plurality of supporting units (2) and an end member (3), wherein the supporting units (2) can be coupled with each other and with the base element (1) and the end member (3), wherein the base element (1) is provided with fastening elements to be mounted to a structure and with a receiving part (4) and wherein the receiving part (4) has an undercut region (5), and wherein each supporting unit (2) comprises a stator core (6), at least one locking pin (7) and an annular member (8), wherein each stator core (6) has an upper axial end and a lower axial end and wherein each stator core (6) is provided with an engagement section (9) with an overlapping segment (10) at its upper axial end and with a receiving section (11) with an undercut region (12) at its lower axial end, and wherein the engagement section (9) of a stator core (6) of a first supporting unit (2.1) can be inserted in the receiving part (4) of the base element (1) or in a receiving section (11.2) of a stator core (6.2) of an upstream supporting unit (2.2) and can be rotated in an inserted position, wherein a coupling end position can be reached by the rotation, and wherein in the coupling end position the overlapping segment (10.1) of the engagement section (9.1) of the stator core (6.1) of the first supporting unit (2.1) can engage in the undercut region (5) of the receiving part (4) of the base element (1) or in an undercut region (12.2) of the receiving section (11.2) of the stator core (6.2) of the upstream supporting unit (2.2), and wherein each stator core (6) has a locking pin opening (13) which can receive the at least one locking pin (7) of the corresponding supporting unit (2) and bring it into an axial end position, wherein the couple end position of the first supporting unit (2.1) can be provided by a locking pin (7.1) of the stator core (6.1) of the first supporting unit (2.1) by means of a positive-fit lock that blocks the rotation of the stator core (6.1) of the first supporting unit (2.1) relative to the base element (1) or the stator core (6.2) of the upstream supporting unit (2.2), and wherein the locking pin (7.1) of the first supporting unit (2.1) in its axial end position can be determined by the stator core (6.3) of a downstream supporting unit (2.3) in its couple end position or by the end member (3), and wherein each annular member (8) encompasses the stator core (6) of the associated supporting unit (2) and is designed to rotate around the stator core (6), and wherein each annular member (8) is provided with always one mounting part (14) for mounting medical devices, and wherein the end member (3) can be connected at its lower axial end to the stator core (6) of a supporting unit (2).

2. The medical positioning and holding device according to claim 1,
wherein each stator core (6) is provided with a radial flange (15) at an axial end, and wherein the annular member (8) of a supporting unit (2) is axially guided by the radial flange (15) of the stator core (6) of the associated supporting unit (2) at a first axial end and by the radial flange (15) of the stator core (6) of an upstream or downstream supporting unit (2) or by the base element (1) or by the end member (3) at a second axial end.

3. The medical positioning and holding device according to claim 1 or 2,
wherein the at least one locking pin (7) of an upstream supporting unit (2) in a position other than its axial end position prevents a downstream supporting unit (2) or the end member (3) from reaching a coupling end position.

4. The medical positioning and holding device according to one of the previous claims,
wherein the locking pin opening (13) of a supporting unit (2) has an internal thread section and the associated locking pin (7) has an external thread section, and wherein the locking pin (7) in its axial end position can be clamped against a corresponding bottom of a recess (17) of the upstream supporting unit (2.2) or of the base element (1).

5. The medical positioning and holding device according to one of the previous claims,
wherein the mounting parts (14) of the annular members (8) of the supporting units (2) are designed as supporting arms.

6. The medical positioning and holding device according to one of the previous claims,
wherein the undercut regions (5) and/or overlapping segments (10) have a multi-section design and are provided in a radially distributed arrangement.

## Revendications

1. Dispositif médical de positionnement et de maintien comportant un élément de base (1), plusieurs unités supports (2) ainsi qu'un élément terminal (3), et les unités supports (2) peuvent être couplées entre elles et avec l'élément de base (1) ainsi qu'avec l'élément terminal (3), et l'élément de base (1) est muni des moyens de fixation pour l'ancrage sur une structure ainsi qu'une partie de logement (4) et la partie de logement (4) possède une zone en contre-dépouille (5) et chaque unité support (2) est munie d'un noyau statorique (6), au moins d'un boulon de verrouillage (7) et d'un corps annulaire (8), et chaque noyau statorique (6) possède une extrémité axiale supérieure et une extrémité axiale inférieure et chaque noyau statorique (6) est muni d'un secteur d'engagement (9) sur son extrémité axiale supérieure avec un segment de recouvrement (10) et d'une partie de logement (11) sur son extrémité axiale inférieure avec une zone en contre-dépouille (12) et le secteur d'engagement (9) d'un noyau statorique (6) d'une première unité support (2.1) peut être inséré dans la partie de logement (4) de l'élément de base (1) ou dans une partie de logement (11.2) d'un noyau statorique (6.2) d'une unité support (2.2) en amont et peut être tourné en sa position insérée, et une position finale de couplage peut être fournie grâce à cette torsion et dans cette position finale de couplage, l'engagement du segment de recouvrement (10.1) du secteur d'engagement (9.1) du noyau statorique (6.1) de la première unité support (2.1) dans la zone en contre-dépouille (5) de la partie de logement (4) de l'élément de base (1) ou dans une zone en contre-dépouille (12.2) de la partie de logement (11.2) du noyau statorique (6.2) de l'unité support (2.2) en amont devient possible, et chaque noyau statorique (6) est muni d'un logement de boulon de verrouillage (13), dans lequel au moins un boulon de verrouillage (7) de l'unité support (2) respective peut être logé et positionné dans une position axiale finale, et - au moyen d'un boulon de verrouillage (7.1) du noyau statorique (6.1) de la première unité support (2.1) - sa position finale de couplage peut être fournie à l'aide du blocage craboté du noyau statorique (6.1) de la première unité support (2.1) contre torsion par rapport à l'élément de base (1) ou du noyau statorique (6.2) de l'unité support (2.2) en amont et le boulon de verrouillage (7.1) de la première unité support (2.1) peut être fixé dans sa position axiale finale par un noyau statorique (6.3) d'une unité support (2.3) en aval en sa position finale de couplage ou par l'élément terminal (3) et chaque corps annulaire (8) entoure le noyau statorique (6) de l'unité support appartenante (2) et est réalisé d'une manière rotative autour du noyau statorique (6) et chaque corps annulaire (8) est respectivement muni d'une partie de fixation (14) pour monter des unités médicaux et l'élément terminal (3) peut être connecté avec le noyau statorique (6) d'une unité support (2) par son extrémité axiale inférieure.

2. Dispositif médical de positionnement et de maintien suivant la revendication 1
dont chaque noyau statorique (6) est muni d'une bride radiale fixe (15) sur une extrémité axiale et le corps annulaire (8) d'une unité support (2) est guidé axialement sur une première extrémité axiale par la bride radiale (15) du noyau statorique (6) de l'unité support appartenante (2) et sur une deuxième extrémité axiale par la bride radiale (15) du noyau statorique (6) d'une unité support (2) en amont ou en aval ou par l'élément de base (1) ou par l'élément terminal (3).

3. Dispositif médical de positionnement et de maintien suivant la revendication 1 ou 2
dont au moins un boulon de verrouillage (7) d'une unité support (2) en amont évite dans une position différente de sa position axiale finale la réalisation d'une position finale de couplage pour une unité support (2) en aval ou un élément terminal (3).

4. Dispositif médical de positionnement et de maintien suivant une des revendications précédentes
dont le logement de boulon de verrouillage (13) d'une unité support (2) est muni d'une partie de filet intérieur et le boulon de verrouillage appartenant (7) est muni d'une partie de filet extérieur et le boulon de verrouillage (7) peut être serré en sa position axiale finale contre un fond correspondant d'un évidement (17) de l'unité support (2.2) en amont ou de l'élément de base (1).

5. Dispositif médical de positionnement et de maintien suivant une des revendications précédentes
dont les parties de fixation (14) des corps annulaires (8) pour les unités supports (2) sont conçus comme bras de support.

6. Dispositif médical de positionnement et de maintien suivant une des revendications précédentes
dont les zones en contre-dépouille (5) et/ou les segments de recouvrement (10) se composent de plusieurs éléments et sont disposés de façon repartie radialement.
